# EUROPEAN PATENT APPLICATION

(11) **EP 3 098 105 A1**
(43) Date of publication of application: **30.11.2016**
(21) Application number: 15740601.8
(22) Date of filing: 04.01.2015
(51) Int. Cl.: B60K 17/22

(54) **BUFFER SHAFT FOR TRANSMISSION OF ROTARY TORQUE**

(30) Priority: 21.01.2014 CN 201410026596
(71) Applicant: Chu, Feng-Sung, Kaohsiung City 814 (TW)
(72) Inventor: Chu, Feng-Sung, Kaohsiung City 814 (TW)
(74) Representative: Brown, Michael Stanley
(86) International application number: PCT/CN2015/070014
(87) International publication number: WO 2015/109936

(57) **Abstract**

The present invention relates to a rotating torque transmission buffered shaft, mainly including a casing tube, a shaft tube and a lock mounting member. The casing tube is formed with a receiving space and the inner walls of both ends of the casing tube are formed with a first inner screw thread and a second inner screw thread respectively. The shaft tube is installed within the receiving space and the middle section of the shaft tube is formed with a screw thread portion corresponding to the first inner screw thread. The lock mounting member is engaged and locked on the second inner screw thread. The rotating torque transmission buffered shaft described in the present invention is mainly applied to ships, speed boats, vehicles of large-sized transportation systems; can absorb and balance intense rotating torque generated instantly; and can reduce the torque difference generated during the operation due to the linkage between the engine and the transmission device.

## Description

The present invention relates to a buffered shaft, especially a rotating torque transmission buffered shaft which can transmit the torque force, generated from the power output of a vehicle or an engine through a gearbox or an automatic transmission device, to roll or rotate the tires.

### [DESCRIPTION OF PRIOR ART]

According to the fact, regardless what the form to install an engine and driving wheels is, there must be a complete transmission line, namely a transmission shaft, between the engine and the engine-driven wheels in order to output the power of an engine to the wheels through the clutch, gearbox, transmission shaft, transmission assembly, and finally axle beam, that makes the tires to rotate and thus to drive the vehicle. Once the part of the transmission shaft is damaged, worn, deformed, and loss of dynamic balance can cause the car to make unusual noise and vibration while in driving. In worse cases, such condition can lead to damage to relevant parts. Besides, the transmission shaft is a rotary member of high rotation speed and with little support, and therefore having dynamic balance is critically important.

However, when a vehicle is travelling, changing gear or moving along an uneven road, the vehicle will generate more engine power which causes significant differences in speed ratio between tires as well as the transmission rotation speed to overload instantaneously leading to an unbalanced torque value and causing damage to the engine, gearbox, and differential device.

### [SUMMARY]

The main object of the present invention is to provide a rotating torque transmission buffered shaft of simple structure to reduce undesired gear shifting and the degree of vehicle vibration.

According to the object described above, the rotating torque transmission buffered shaft of the present invention includes a casing tube, a shaft tube and a lock mounting member.

The casing tube has a receiving space, wherein a first inner screw thread and a second inner screw thread are formed on the inner surface at both ends of the casing tube separately. A second spring body and a second ball bearing are connected to each other and installed in the receiving space.

One end of the shaft tube is installed inside the receiving space and a screw thread portion corresponding to the first inner screw thread is formed in the middle section of the shaft tube. The portion of the shaft tube located inside the receiving space is sleeved with a first ball bearing and a first spring body in sequence, and is locked with a mounting member at the end of the shaft tube in order to make the first ball bearing and the first spring body to be fixedly installed between the mounting member and the screw thread portion. One end of the mounting member is next to and against the second spring body.

The lock mounting member is placed and locked onto the second inner screw thread in order to keep the second spring body and the second ball bearing to fixedly remain within the receiving space,
wherein a mounting rod, which is installed within the center of the mounting member, can be locked on to the shaft tube;
wherein the front section of the shaft tube is installed with an universal joint; one side of the casing tube, where the lock mounting member is located, is installed with an universal joint;
wherein the rotating torque transmission buffered shaft can be applied to transportation systems;
wherein the transportation systems can be vehicles, ships or speed boats; and
wherein the first inner screw thread and the screw thread portion are with a dual thread form.

The rotating torque transmission buffered shaft of the present invention is applicable to the transmission shaft of a vehicle. When the vehicle engine transfers the torque force through the gearbox and the rotating torque transmission buffered shaft to set the tires to roll or rotate, it performs the function of engine-driven operation. By means of torsion between the first inner screw thread within the casing tube and the screw thread portion on the shaft tube, the rotating torque transmission buffered shaft can absorb and balance intense rotating torque generated instantly and can reduce the torque difference generated during the operation due to the linkage between the engine and the transmission device. The rotating torque transmission buffered shaft can also prolong the lifetime of the engine, gearbox, and differential device.

Furthermore, the rotating torque transmission buffered shaft can protect the engine-driven key components, effectively prevent fracture to the engine crankshaft, transmission gear shaft, differential device helical gear, and differential device helical gear shaft caused by improper human operations or a sudden change of the environment in which the transmission performs. At the same time, the rotating torque transmission buffered shaft can increase the vehicle stability and prolong mileages of tires.

### [BRIEF DESCRIPTION OF THE DRAWINGS]

The present invention will become more fully understood from the detailed description given herein below for illustration only, and thus does not limit the present invention, wherein:
Fig. 1 is an exploded schematic view of the present invention;
Fig. 2 is a schematic combination view of the present invention;
Fig. 3 is a schematic view of the embodiment (1) of the present invention;
Fig. 4 is a schematic view of the embodiment (2) of the present invention;
Fig. 5 is a schematic view of the embodiment (3) of the present invention;

### [DETAILED DESCRIPTION OF PREFERRED EMBODIMENTS]

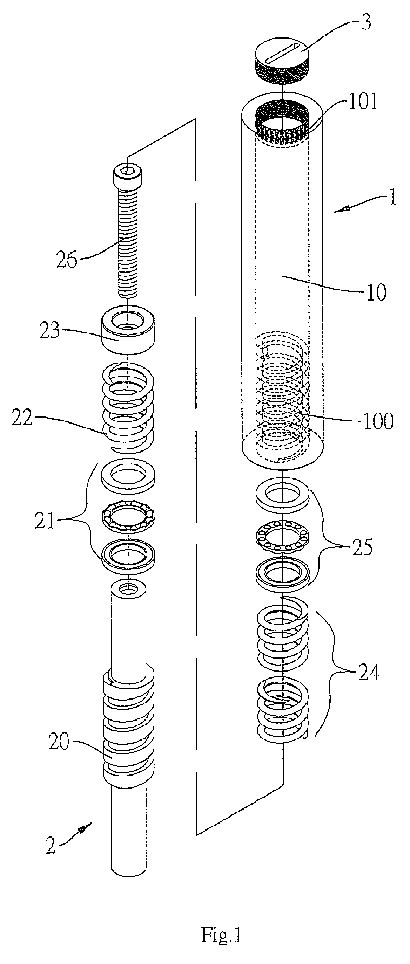

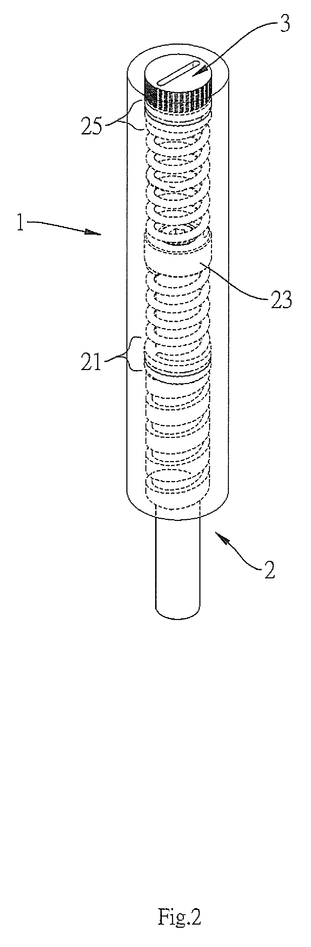

First, with reference to Fig. 1 and Fig. 2, according to the figures, the rotating torque transmission buffered shaft of the present invention comprises a casing tube 1, a shaft tube 2 and a lock mounting member 3.

The casing tube 1 has a receiving space 10, wherein a first inner screw thread 100 and a second inner screw thread 101 are formed on the inner surface at both ends of the casing tube 1 separately. A second spring body 24 and a second ball bearing 25 are connected to each other and installed inside the receiving space 10.

One end of the shaft tube 2 is installed inside the receiving space 10 and a screw thread portion 20 corresponding to the first inner screw thread 100 is formed in the middle section of the shaft tube 2. The portion of the shaft tube 2 located inside the receiving space 10 is sleeved with a first ball bearing 21 and a first spring body 22 in sequence, and is locked with a mounting member 23 at the end of the shaft tube 2 in order to make the first ball bearing 21 and the first spring body 22 to be fixedly installed between the mounting member 23 and the screw thread portion 20. One end of the mounting member 23 is next to and against the second spring body 24. A mounting rod 26, which is installed within the center of the mounting member 23, can be locked on to the shaft tube 2. The first inner screw thread 100 and the screw thread portion 20 are with a dual thread form.

The lock mounting member 3 is placed and locked onto the second inner screw thread 101 in order to keep the second spring body 24 and the second ball bearing 25 to fixedly remain within the receiving space 10.

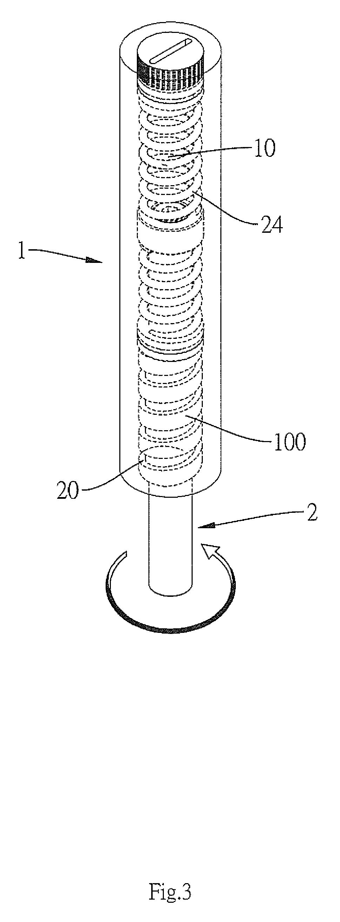

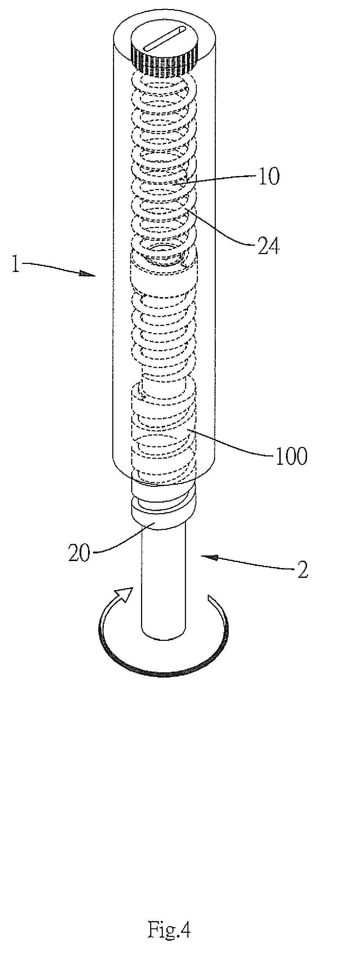

Next, with reference to Fig. 3 and Fig. 4, according to the figures, the rotating torque transmission buffered shaft of the present invention is mainly to have the shaft tube 2 installed within the receiving space 10 of the casing tube 1. By means of rotation between the screw thread portion 20 and the first inner screw thread 100, the rotating torque transmission buffered shaft can absorb and balance intense rotating torque generated instantly and, at the same time, can make the second spring body 24 in the receiving space 10 to compress or rebound. Therefore, when the rotating torque transmission buffered shaft is installed in large-sized transportation systems, such as vehicles, ships or speed boats, it can obtain a good buffer space during reversing or forwarding operations.

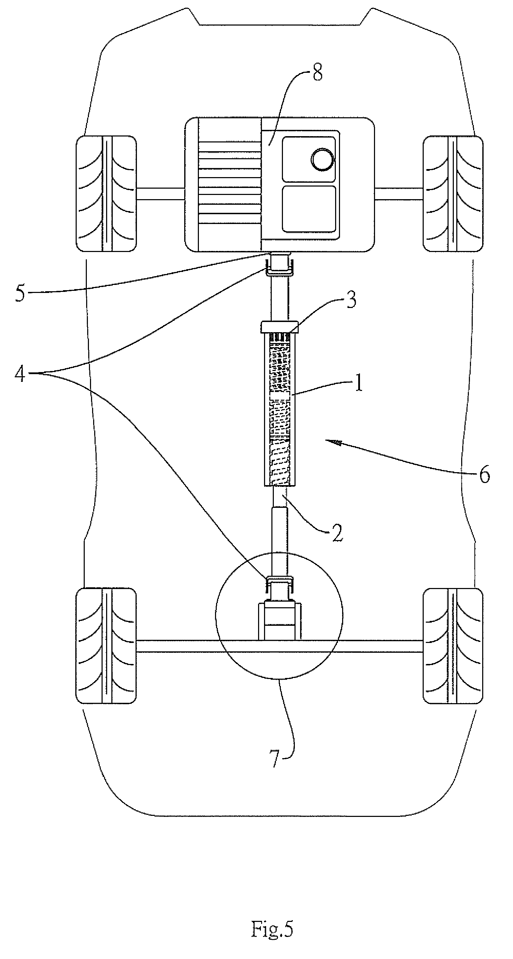

Last, with reference to Fig. 5, the rotating torque transmission buffered shaft of the present invention is mainly installed in large-sized transportation systems, such as ships, speed boats and vehicles. The present invention uses vehicles as an example. According to the figure, the front section of the shaft tube 2 is installed with an universal joint 4; one side of the casing tube 1, where the lock mounting member 3 is located, is installed with an universal joint 4.

Vehicles installed with the present invention are presented as an example. The structure comprises a universal joint 4, a sliding joint 5, a rotating torque transmission buffered shaft 6, and a rear axle assembly 7. When the vehicle engine transfers the torque force through the gearbox 8 and the rotating torque transmission buffered shaft 6 to set the tires to roll or rotate, it performs the function of engine-driven operation. The rotating torque transmission buffered shaft 6 mainly can absorb and balance intense rotating torque generated instantly, and can reduce the torque difference generated during the operation due to the linkage between the engine and the transmission device. Therefore, the rotating torque transmission buffered shaft can protect the mechanic devices including the engine, gearbox 8, and differential device; prolong the lifetime of the engine, gearbox, and differential device; and increase the vehicle stability and mileages of tires.

In summary, advantages of the rotating torque transmission buffered shaft of the present invention are as follows. The rotating torque transmission buffered shaft,
1 can absorb and balance intense rotating torque generated instantly, and can reduce the torque difference generated during the operation due to the linkage between the engine and the transmission device;
2 can protect the mechanic devices including the engine, gearbox, and differential device and prolong the lifetime of the engine, gearbox, and differential device;
3 can maintain the effect of a comfortable ride when the vehicle is operated at a high or low speed;
4 can minimize the mental weariness of the drivers or operators during a long period of driving or operations as well as maintain the driving safety when drivers engage in the long-distance driving;
5 can make the step-on and release operation of transmission clutch more easily and maintain a smooth start of manual transmission vehicles and trucks regardless of medium-high load, low load and for hill-start;
6 increases the vehicle stability and mileages of tires;
7 ensures a smooth acceleration and reduces undesired gear shifting and the degree of vehicle vibration while the vehicle is at high speed or during automatic gear shift;
8 can effectively prevent vehicle tires from skidding out of control while making a turn;
9 can protect the engine-driven key components, effectively prevent fracture to the engine crankshaft, transmission gear shaft, differential device helical gear, and differential device helical gear shaft caused by improper human operations or a sudden change of the environment in which the transmission performs; and
10 can reduce the installation cost and the space occupied if the rotating torque transmission buffered shaft is installed on the buffer device of the yacht.

### [Components symbol]

| | | | |
|---|---|---|---|
| 1 | casing tube | 25 | second ball bearing |
| 10 | receiving space | 26 | mounting rod |
| 100 | first inner screw thread | 3 | lock mounting member |
| 101 | second inner screw thread | 4 | universal joint |
| 2 | shaft tube | 5 | sliding joint |
| 20 | screw thread portion | 6 | rotating torque transmission buffered shaft |
| 21 | first ball bearing | | |
| 22 | first spring element | 7 | rear axle assembly |
| 23 | mounting member | 8 | gearbox |
| 24 | first spring element | | |

## Claims

1. A rotating torque transmission buffered shaft, mainly comprising:
a casing tub, wherein the casing tube is formed with a receiving space; the inner walls of both ends of the casing tube are formed with a first inner screw thread and a second inner screw thread respectively; and a second spring body and a second ball bearing are connected to each other and installed in the receiving space;
a shaft tube, wherein one end of the shaft tube is installed within the receiving space; the middle section of the shaft tube is formed with a screw thread portion corresponding to the first inner screw thread; the portion of the shaft tube located inside the receiving space is sleeved with a first ball bearing and a first spring body in sequence and is locked with a mounting member at the end of the shaft tube in order to make the first ball bearing and the first spring body to be fixedly installed between the mounting member and the screw thread portion whereas one end of the mounting member is next to and against the second spring body; and
a lock mounting member, wherein the lock mounting member is engaged and locked on the second inner screw thread to make the second spring body and the second ball bearing to be fixedly installed within the receiving space.

2. The rotating torque transmission buffered shaft as claimed in claim 1, wherein a mounting rod, which is installed within the center of the mounting member, can be locked on to the shaft tube.

3. The rotating torque transmission buffered shaft as claimed in claim 1, wherein the front section of the shaft tube is installed with an universal joint; one side of the casing tube, where the lock mounting member is located, is installed with an universal joint.

4. The rotating torque transmission buffered shaft as claimed in claim 1, wherein the rotating torque transmission buffered shaft can be applied to transportation systems.

5. The rotating torque transmission buffered shaft as claimed in claim 4, wherein the transportation systems can be vehicles, ships or speed boats.

6. The rotating torque transmission buffered shaft as claimed in claim 1, wherein the first inner screw thread and the screw thread portion are with a dual thread form.
